# EUROPÄISCHE PATENTSCHRIFT

(11) **EP 3 484 733 B1**
(45) Veröffentlichungstag und Bekanntmachung des Hinweises auf die Patenterteilung: **22.01.2020**
(21) Anmeldenummer: 17734026.2
(22) Anmeldetag: 21.06.2017
(51) Int. Cl.: B60G 9/00, B60G 11/28, F16F 9/04, F16F 9/05, F16F 9/54

(54) **FAHRWERKSSYSTEM MIT EINEM LÄNGSLENKER UND EINEN RELATIV ZUM LÄNGSLENKER VERLAGERBAREN TAUCHKOLBEN**
CHASSIS SYSTEM HAVING A LONGITUDINAL CONTROL ARM AND A PLUNGER THAT CAN BE MOVED RELATIVE TO THE LONGITUDINAL CONTROL ARM
SYSTÈME DE SUSPENSION COMPORTANT UN BRAS OSCILLANT ET UN PISTON PLONGEUR DÉPLAÇABLE PAR RAPPORT AU BRAS OSCILLANT

(30) Priorität: 14.07.2016 DE 102016113011
(43) Veröffentlichungstag der Anmeldung: 22.05.2019
(73) Patentinhaber: SAF-HOLLAND GmbH, 63856 Bessenbach (DE)
(72) Erfinder: WEBER, Elmar, 48249 Dülmen (DE)
(74) Vertreter: Müller Schupfner & Partner Patent- und Rechtsanwaltspartnerschaft mbB
(86) Internationale Anmeldenummer: PCT/EP2017/065257
(87) Internationale Veröffentlichungsnummer: WO 2018/010925

(56) Entgegenhaltungen:
- DE-A1-102012 201 745
- DE-U1- 29 616 257

## Beschreibung

Die vorliegende Erfindung betrifft ein Fahrwerkssystem, insbesondere für Nutzfahrzeuge, einen Tauchkolben sowie einen Längslenker.

Fahrwerkssysteme der in Rede stehenden Art umfassen beispielsweise einen Längslenker, welcher drehbar in einem Haltebock gelagert und z. B. über einen Luftfederbalg, nebst entsprechendem Dämpferelement, gefedert bzw. gedämpft ist. Dabei umfasst der Luftfederbalg einen Tauchkolben, welcher an oder im Bereich eines Lenkerendes des Längslenkers befestigt ist. Die Lage bzw. Position dieser Anordnung/Befestigung ist bei den aus dem Stand der Technik bekannten Systemen fest vorgegeben, beispielsweise über ein entsprechendes Bohrbild im Lenkerende. Dies kann aber zu Problemen führen, wenn das Fahrwerkssystem in unterschiedlichen Fahrzeugtypen, welche z. B. unterschiedlichen Bauraum zur Verfügung stellen oder eine unterschiedliche Achskinematik aufweisen, eingesetzt werden soll. Die Folge ist, dass eine große Variantenvielfalt vorgehalten bzw. die Luftfederbalganordnung relativ zum gerade verwendeten Längslenker immer individuell abgestimmt werden muss.

Die DE 296 16 257 U1 betrifft eine Aufhängung für luftgefederte Fahrzeugachsen.

Die DE 10 2012 201 745 A1 offenbart eine Luftfederbefestigung, insbesondere für Nutzfahrzeuge, welche ein Positionierelement umfasst.

Es ist daher eine Aufgabe der vorliegenden Erfindung, ein Fahrwerkssystem, einen Tauchkolben sowie einen Längslenker anzugeben, welche die vorgenannten Nachteile beseitigen und gleichzeitig einen kostengünstigen und flexiblen Systemaufbau ermöglichen.

Diese Aufgabe wird durch ein Fahrwerkssystem gemäß Anspruch 1 gelöst. Weitere Vorteile und Merkmale ergeben sich aus den Unteransprüchen sowie der Beschreibung und den beigefügten Figuren.

Erfindungsgemäß umfasst ein Fahrwerkssystem, insbesondere für Nutzfahrzeuge, einen Längslenker und einen Tauchkolben, welche über einen Verbindungsbereich miteinander verbunden oder verbindbar bzw. aneinander anordenbar oder aneinander angeordnet sind, wobei der Verbindungsbereich eine Verstelleinrichtung aufweist, welche ein Eingriffselement und ein Führungselement umfasst, und wobei das Eingriffselement in bzw. relativ zum Führungselement derart verlager- bzw. verschiebbar ist, dass ein translatorisches Verlagern bzw. Verschieben des Tauchkolbens relativ zum Längslenker ermöglicht ist. Gemäß einer bevorzugten Ausführungsform ist der Längslenker drehbar in bzw. an einem Haltebock gelagert. Der Haltebock wiederum ist z. B. an einem Fahrzeugrahmen einer (Nutzfahrzeug-)Zugmaschine oder eines (Nutzfahrzeug-)Anhängers befestigt. In bzw. am Längslenker ist ein Achsrohr, welches sich entlang einer Achsrohrlängsrichtung erstreckt, die wiederum im Wesentlichen quer zu einer Fahrtrichtung des Fahrzeugs orientiert ist, angeordnet oder anordenbar. Die Dämpfung erfolgt bevorzugt über ein Dämpferelement, welches zweckmäßigerweise am Haltebock und dem Längslenker festgelegt oder festlegebar ist. In Fahrtrichtung gesehen hinter dem Achsrohr bildet der Längslenker ein Lenkerende aus bzw. weist dieses auf, wobei bevorzugt in oder an dem Lenkerende der Luftfederbalg angeordnet ist. Insbesondere ist der Tauchkolben des Luftfederbalgs am Lenkerende befestigt/angeordnet, wobei nun mit Vorteil der Verbindungsbereich, umfassend die Verstelleinrichtung, vorgesehen ist, worüber das, insbesondere translatorische, Verschieben des Tauchkolbens bzw. des Luftfederbalgs relativ zum Längslenker/Lenkerende ermöglicht ist. Insbesondere ist eine Verlagerbar- bzw. Verschiebbarkeit in einer im Wesentlichen horizontalen Ebene ermöglicht, wobei die Lage und Orientierung dieser horizontalen Ebene durch die Ausgestaltung des Längslenkers, insbesondere des Lenkerendes, vorgegeben ist. Gemäß einer Ausführungsform weist das Lenkerende z. B. eine Art Plateau auf, auf welchem der Tauchkolben angeordnet ist. Durch die Verlagerbarkeit und die daraus resultierenden Freiheitsgrade kann auf Platzprobleme reagiert werden, beispielsweise wenn es bei der Anordnung eines bestimmten Luftfederbalgs zu einer Kollision mit einem anderen Bauteil des Fahrwerks kommen würde. Mit Vorteil können durch die Verlagerbarkeit auch die Krafteinleitung und die gesamte Achskinematik angepasst werden. Einfach und effektiv können zudem unterschiedliche Balgüberhänge und Balgversätze (und somit auch Radstände und Spurbreiten) allein durch die Ausrichtung des Luftfederbalgs bzw. des Tauchkolbens relativ zum Längslenker realisiert werden. Ermöglicht wird dies durch das Zusammenspiel des Eingriffselements und des Führungselements, wobei das Führungselement ausgelegt ist, das Eingriffselement formschlüssig entlang eines Verstellwegs zu führen, wobei sich dieser Verstellweg z. B. entlang der Achsrohrlängsrichtung bzw. allgemein entlang einer Längsrichtung des Führungselements erstreckt. Dabei ist nicht festgelegt, dass das Führungselement dem Lenkerende zugewiesen ist und das Eingriffselement dem Tauchkolben. Auch eine umgekehrte Ausgestaltung ist möglich.

In einer bevorzugten Ausführungsform stütz sich der Tauchkolben direkt an einem Bereich des Längslenkers ab. Durch die Reduktion der Fügestellen werden die Auswirkungen des Setzens der Bauteile reduziert. Insbesondere Vorteilhaft ist es, wenn der sich zwischen dem Achsrohr und dem Tauchkolben erstreckende Teil des Längslenkers einteilig ausgebildet ist. Hierdurch wird erreicht, dass der Querlenker auch für hohe Belastungen ausgelegt ist.

Vorteilhafterweise ist der Verbindungsbereich als eine Adapterplatte ausgebildet, welche zwischen dem Längslenker und dem Luftfederbalg angeordnet ist. Hierdurch wird eine kompakte Bauweise erreicht, welche auch als ein Nachrüstsatz für bereits bestehende Fahrwerkssysteme ausgelegt werden kann. Bevorzugt ist die Adapterplatte unmittelbar am Längslenker und/oder am Federbalg angeordnet. Hierdurch wird eine besonders kompakte Bauweise erreicht. Vorteilhafterweise sind die kontaktierenden Flächen der Adapterplatte, welche dazu ausgelegt sind mit anderen Bauteilen des Fahrwerkssystems in Kontakt zu treten, parallel zueinander ausgebildet. Hierdurch wird insbesondere eine Biegebelastung der Adapterplatte vermieden, sodass diese nur eine geringe Materialstärke aufweisen muss, sodass Gewicht gespart werden kann.

Gemäß einer Ausführungsform ist die Verstelleinrichtung ausgelegt, eine translatorische Verlagerung oder Verschiebung im Wesentlichen parallel zu der Achsrohrlängsrichtung zu ermöglichen, beispielsweise um einen gewissen Versatz (entlang des Verstellwegs). Ein derartiger Versatz, bezogen auf eine Mittelachse des Luftfederbalgs und einer Mittellinie des Längslenkers bzw. des Lenkerendes, liegt in bevorzugten Ausführungsformen in einem Bereich von bis zu 70 mm, beispielsweise bei etwa 20, 30, 40, 50 oder 60 mm. Zweckmäßigerweise kann dann das Eingriffselement in der gewünschten Position festgelegt bzw. arretiert werden, wobei die Arretierung bevorzugt über eine form- und/oder kraftschlüssige Verbindung, beispielsweise über eine Schraub- und/oder Steckverbindung erfolgen kann, welche das Eingriffselement relativ zum Führungselement festlegt. Insbesondere ist in Bezug auf die Mittellinie des Längslenkers ein Versatz in Richtung einer Fahrwerksmitte bevorzugt. Alternativ oder zusätzlich kann der Versatz aber auch nach außen erfolgen oder auch schräg zur Achsrohrlängsrichtung bzw. quer dazu.

Erfindungsgemäß ist ein stufenloses Einstellen des Versatzes ermöglicht, dadurch dass das Eingriffselement in dem Führungselement stufenlos verschoben werden kann.

Gemäß einer bevorzugten Ausführungsform weist das Führungselement einen Führungskanal auf, insbesondere ein Nutprofil. Das Führungselement bzw. der Führungskanal erstrecken sich dabei im Wesentlichen entlang einer Geraden, wobei diese Gerade in einer bevorzugten Ausführungsform im Wesentlichen parallel zur Achsrohrlängsrichtung orientiert ist und damit im Wesentlichen quer zur Fahrtrichtung. Möglich ist auch, im Wesentlichen parallel zueinander mehrere derartige Führungskanäle vorzusehen. Alternativ können das Führungselement bzw. der Führungskanal oder das Nutprofil aber auch zumindest bereichsweise eine Krümmung oder einen Bogen aufweisen, wodurch quasi eine zweidimensionale Verstellung ermöglicht ist. Ein Führungskanal weist dabei insbesondere eine Wand, einen Boden und eine längliche Öffnung auf. Vorteilhafterweise umfasst der Kanal jedoch zwei Wände. Hierdurch wird erreicht, dass sich unter anderem ein mögliches Eingriffselement bidirektional an beiden Wänden des Führungskanals abstützten kann. Zweckmäßigerweise kann der Querschnitt des Führungskanals derart ausgebildet sein, dass dieser eine Hinterschneidung aufweist. Hierdurch wird erreicht, dass insbesondere ein mögliches Eingriffselement bedingt durch einen Formschluss mit der Hinterschneidung des Führungskanals nicht aus dem selbigen gezogen werden kann. Gemäß einer bevorzugten Ausführungsform beträgt eine Tiefe eines derartigen Führungskanals bzw. Nutprofils wenigstens etwa 20 mm, insbesondere zumindest etwa 30 mm, eine Breite liegt bei wenigstens 20 mm, insbesondere bei wenigstens 34 mm. Ein Querschnitt des Führungskanals bzw. Nutprofils kann eine im Wesentlichen eckige, beispielsweise quadratische oder rechteckige Form, aufweisen. Alternativ kann auch eine Art von Schwalbenschwanzführung vorgesehen sein, welche auch entlang der Mittelachse gesehen einen Formschluss ermöglicht. Auch rundliche, beispielsweise ovale oder kreisrunde Konturen sind möglich. Bevorzugt ist auch eine Ausgestaltung in Art einer T-Nut. Entscheidend ist, dass mit dem Eingriffselement eine formschlüssige Verbindung geschaffen wird, welche insbesondere quer zu einer Längserstreckung des Führungselements einen Formschluss ermöglicht und welche entlang einer Längserstreckung des Führungselements das Verschieben ermöglicht. Zusätzlich oder alternativ kann sich auch zumindest ein Führungselement bzw. zumindest ein Führungskanal im Wesentlichen entlang der Fahrtrichtung oder auch in einem Winkel schräg dazu erstrecken. Mehrere Führungskanäle müssen auch nicht parallel angeordnet sein sondern können sich ggf. auch schneiden, beispielsweise etwa in einem 90°-Winkel. Auf diese Weise kann eine sehr variable Verstelleinrichtung realisiert werden.

Gemäß einer Ausführungsform ist das Führungselement, insbesondere der Führungskanal bzw. das Nutprofil, an einem Ende geschlossen. Das geschlossene Ende ist gemäß einer Ausführungsform beispielsweise dasjenige Ende, welches zu einer Fahrzeug-Außenseite hin orientiert ist. Auf diese Weise kann beispielsweise eine Unterscheidungsmöglichkeit zwischen einem linken und einem rechten Längslenker geschaffen werden, wodurch die Montage erheblich vereinfacht werden kann. Zweckmäßigerweise ist das Führungselement, insbesondere der Führungskanal, derart an zumindest einem Ende ausgebildet, dass das Eingriffselement eingeführt, insbesondere eingeschoben werden kann. Hierzu ist der Führungskanal z. B. seitlich oder von oben entsprechend zugänglich.

Gemäß einer Ausführungsform sind im und/oder am Führungselement ein oder mehrere Distanzstücke angeordnet oder anordenbar, um eine Einstellung einer Position des Eingriffselements relativ zum Längslenker beziehungsweise zum Führungselement zu ermöglichen. Über die Länge der verwendeten Distanzstücke kann schnell und einfach die Länge des vorher erwähnten Versatzes eingestellt werden. Mit Vorteil kann ein Distanzstück zum Beispiel an dem vorgenannten geschlossenen Ende anliegen, wobei das geschlossene Ende vorteilhafterweise als Anschlag wirkt. Derartige Distanzstücke können links und rechts vom Eingriffselement im Führungskanal angeordnet werden, sodass über eine Befestigung eines entsprechenden Distanzstücks, das Eingriffselement in einer bestimmten Position relativ zum Führungskanal bzw. zum Längslenker festgelegt werden kann. Das oder die Distanzstücke, welche ihrerseits in dem Führungselement/Führungskanal verschiebbar sind bzw. in diese eingeschoben werden können, können also in dem Führungselement/Führungskanal festgelegt werden, wodurch zweckmäßigerweise auch der Tauchkolben fixiert ist. Durch unterschiedlich lange Distanzstücke, die in das z. B. T-förmige Nutprofil eingeschoben werden können, kann schnell ein gewünschter Tauchkolben- bzw. Balgversatz eingestellt werden.

Gemäß einer Ausführungsform ist das Führungselement in einem Abstand von etwa 340 bis 380 mm zu einem Achsrohrmittelpunkt beabstandet, wobei sich dieser Abstand entlang bzw. parallel der Fahrtrichtung bemisst. In bevorzugten Ausführungsformen liegt der Abstand bei etwa 360 bis 364 mm, beispielsweise bei etwa 362 bis 363 mm, insbesondere 362,5 mm. Es hat sich gezeigt, dass mit diesem Maß eine Vielzahl von unterschiedlichen Fahrzeugtypen bedient werden kann. Wenn das Eingriffselement am Lenkerende ausgebildet ist, dann bezieht sich das vorgenannte Maß auf dessen Abstand zum Achsrohrmittelpunkt.

Gemäß einer bevorzugten Ausführungsform ist das Eingriffselement um einen Abstand relativ zu einer Mittelachse des Tauchkolbens versetzt. Insofern ergibt sich ein weiterer Freiheitsgrad, nämlich durch die unterschiedliche Anordnung des Tauchkolbens auf dem Lenkerende. Der Abstand beträgt in bevorzugten Ausführungsformen etwa 18 bis 26 mm, bevorzugt etwa 20 bis 24 mm, insbesondere etwa 22,5 mm. Dieser "Abstand" hat sich als vorteilhaft erwiesen, um bei einem "gedrehten" Einbau des Luftfederbalgs/Tauchkolbens möglichst viele Fahrzeugtypen bedienen zu können. Wenn der Tauchkolben das Führungselement umfasst, dann bezeichnet der Abstand die Entfernung zwischen der Mittelachse des Tauchkolbens und dem Führungselement.

Gemäß einer bevorzugten Ausführungsform ist der Luftfederbalg bzw. der Tauchkolben derart angeordnet, dass dessen Mittelachse in Fahrtrichtung gesehen hinter dem Führungselement bzw. dem Eingriffselement eingeordnet ist - um den vorerwähnten Abstand in einem Bereich von etwa 18 bis 26 mm. Der Luftfederbalg bzw. der Tauchkolben kann aber auch um 180° gedreht angeordnet sein, sodass dessen Mittelachse in Fachrichtung gesehen vor dem Eingriffselement bzw. dem Führungselement angeordnet ist. In einem Fall ist also die Mittelachse des Luftfederbalgs näher zu einem Achsrohrmittelpunkt hin orientiert als die Verstelleinrichtung, im anderen Fall ist sie weiter wegorientiert.

Gemäß einer Ausführungsform umfasst die Verstelleinrichtung auch mehrere Führungselemente oder Führungskanäle, wodurch die Freiheitsgrade des Luftfederbalgs zum Lenkerende bzw. zum Längslenker noch erhöht werden können. Gemäß einer Ausführungsform ist das Eingriffselement derart ausgebildet, dass eine Drehbarkeit des Tauchkolbens relativ zum Längslenker ermöglicht ist. Dies kann beispielsweise durch ein im Wesentlichen rotationssymmetrisches, inbesondere kugelförmiges, Eingriffselement erfolgen, welches in einem entsprechend ausgebildeten Führungselement formschlüssig angeordnet ist. Bei einer derartigen Ausführungsform stellt sozusagen die Position des Eingriffselements eine Art von Drehachse dar. Diese Ausführungsform ermöglicht bevorzugt eine Schwenkbewegung des Luftfederbalgs relativ zum Längslenker.

Gemäß einer bevorzugten Ausführungsform ist das Eingriffselement im und oder am Tauchkolben drehbar gelagert, insbesondere über einen Einsatz, der drehbar im Tauchkolben angeordnet ist und der das Eingriffselement aufweist bzw. ausbildet. Mit anderen Worten ist also das Eingriffselement derart ausgebildet, dass eine Drehbarkeit des Tauchkolbens relativ zu dessen Mittelachse ermöglicht ist.

Die Erfindung betrifft auch einen Tauchkolben, umfassend ein Eingriffselement oder ein Führungselement.

Weiter betrifft die Erfindung einen Längslenker, umfassend ein Eingriffselement oder ein Führungselement. Für den erfindungsgemäßen Tauchkolben sowie für den erfindungsgemäßen Längslenker gelten die im Zusammenhang mit dem Fahrwerkssystem erläuterten Vorteile und Merkmale analog und entsprechend sowie umgekehrt.

Weitere Vorteile und Merkmale ergeben sich aus der nachfolgenden Beschreibung einer bevorzugten Ausführungsform eines Fahrwerkssystems mit einem Tauchkolben und einem Längslenker mit Bezug auf die beigefügten Figuren.

Es zeigen:
- Figur 1:: eine Seitenansicht einer bevorzugten Ausführungsform eines Fahrwerkssystems in einer ersten Position;
- Figur 2:: eine weitere Ansicht der aus Figur 1 bekannten Ausführungsform eines Fahrwerkssystems in einer zweiten Position.

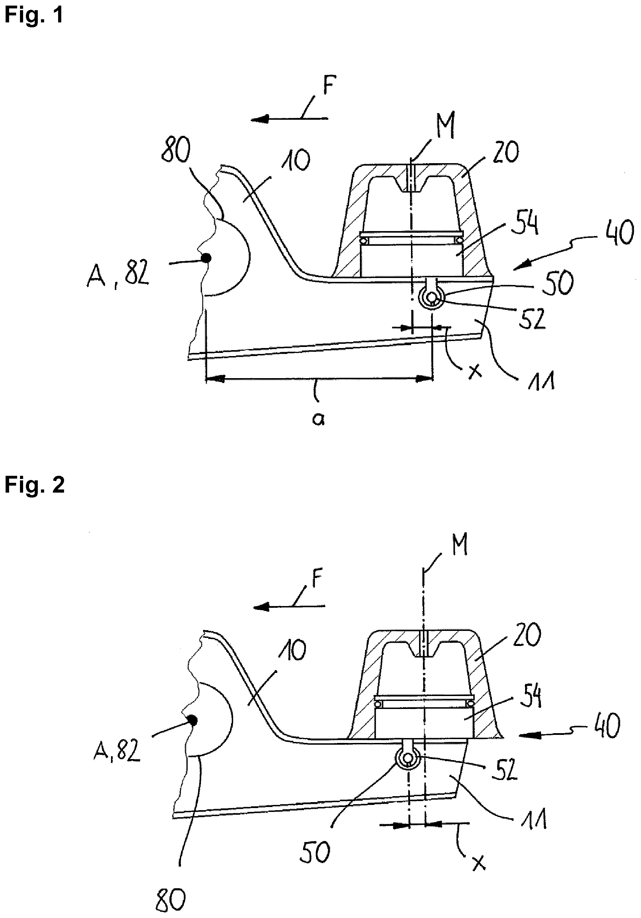

**Fig. 1** zeigt in einer Seitenansicht ein Fahrwerkssystem, umfassend einen Längslenker 10 und einen Tauchkolben 20, welcher an einem Lenkerende 11 des Längslenkers 10 in einem Verbindungsbereich 40 angeordnet ist. Der Längslenker 10, welcher sich im Wesentlichen entlang einer mit dem Bezugszeichen F gekennzeichneten Fahrtrichtung erstreckt, weist einen Anordnungsbereich für ein Achsrohr 80 auf, welches sich entlang einer Achsrohrlängsrichtung A erstreckt, wobei mit dem Bezugszeichen 82 ein Achsrohrmittelpunkt gekennzeichnet ist. Relativ zu diesem bemisst sich ein Abstand a zu einem Führungselement 50, welches in der hier gezeigten Ausführungsform als im Wesentlichen runder Führungskanal 50 ausgebildet ist. In diesem Führungskanal ist ein Eingriffselement 52 angeordnet, wobei sozusagen quer zu einer Zeichenebene ein translatorisches Verschieben des Tauchkolbens 20 relativ zum Längslenker 10 ermöglicht ist. Der Tauchkolben 20 weist eine Mittelachse M auf, welche sozusagen eine Rotationsachse des Tauchkolbens 20 darstellt. Um einen Abstand x, welcher in einem Bereich von etwa 18 bis 26 mm liegt, sind das Führungselement 50 bzw. das Eingriffselement 52 positioniert. Der Abstand a bemisst sich zu etwa 360 bis 364 mm. In der hier gezeigten Ausführungsform ist das Eingriffselement 52 als Teil eines Einsatzes 54 ausgebildet, wobei der Einsatz 54 relativ zum Tauchkolben 20 drehbar ist. Mit anderen Worten ist der Tauchkolben 20 also drehbar zu der Verstelleinrichtung ausgebildet.

**Fig. 2** zeigt die aus Figur 1 bekannte Ausführungsform eines Fahrwerkssystems. Das Hauptaugenmerk ist darauf gerichtet, dass hier der Tauchkolben 20 bzw. dessen Mittelachse M, bezogen auf die Fahrtrichtung F, hinter der Verstelleinrichtung, umfassend das Führungselement 50 und das Eingriffselement 52 angeordnet ist. Durch die Ausbildung der Verstelleinrichtung wird also nicht nur ein verschieben des Tauchkolbens 20 relativ zum Längslenker 10 entlang des Führungskanals 50 realisiert sondern auch quer dazu.

### Bezugszeichenliste

- 10: Längslenker
- 11: Lenkerende
- 20: Tauchkolben
- 40: Verbindungsbereich
- 50: Führungselement, Führungskanal, Nutprofil
- 52: Eingriffselement
- 54: Einsatz
- 80: Achsrohr
- 82: Achsrohrmittelpunkt
- A: Achsohrlängsrichtung
- M: Mittelachse
- x: Abstand
- a: Abstand
- F: Fahrtrichtung

## Patentansprüche

1. Fahrwerkssystem, insbesondere für Nutzfahrzeuge,
umfassend einen Längslenker (10) und einen Tauchkolben (20), welche über einen Verbindungsbereich (40) miteinander verbunden oder verbindbar sind,
wobei der Verbindungsbereich (40) eine Verstelleinrichtung aufweist, welche ein Eingriffselement (52) und ein Führungselement (50) umfasst,
wobei das Eingriffselement (52) relativ zum Führungselement (50) derart verlagerbar ist, dass eine translatorische Verlagerung des Tauchkolbens (20) relativ zum Längslenker (10) ermöglicht ist, und
**dadurch gekennzeichnet, dass** das Eingriffselement (52) in dem Führungselement (50) stufenlos verschoben werden kann.

2. Fahrwerkssystem nach Anspruch 1,
wobei die Verstelleinrichtung ausgelegt ist, eine translatorische Verlagerung im Wesentlichen parallel zu einer Achsrohrlängsrichtung (A) zu ermöglichen.

3. Fahrwerkssystem nach einem der Ansprüche 1 oder 2,
wobei das Führungselement (50) einen Führungskanal (50), insbesondere ein Nutprofil (50), aufweist, welcher vorzugsweise an einem Ende geschlossen ist.

4. Fahrwerkssystem nach einem der vorhergehenden Ansprüche,
wobei im oder am Führungselement (50) eine oder mehrere Distanzstücke angeordnet oder anordenbar sind, um eine Einstellung einer Position des Eingriffselements (52) relativ zum Längslenker (10) bzw. zum Führungselement (50) zu ermöglichen.

5. Fahrwerkssystem nach einem der vorhergehenden Ansprüche,
wobei das Führungselement (50) in einem Abstand (a) von etwa 340 bis 380 mm zu einem Achsrohrmittelpunkt (82) beabstandet ist.

6. Fahrwerkssystem nach einem der vorhergehenden Ansprüche,
wobei das Eingriffselement (52) um einen Abstand (x) relativ zu einer Mittelachse (M) des Tauchkolbens (20) versetzt ist.

7. Fahrwerkssystem nach einem der vorhergehenden Ansprüche,
wobei das Eingriffselement (52) derart ausgebildet ist, dass eine Drehbarkeit des Tauchkolbens (20) relativ zum Längslenker (10) ermöglicht ist.

8. Fahrwerkssystem nach einem der vorhergehenden Ansprüche, wobei das Eingriffselement (52) im und/oder am Tauchkolben (20) drehbar gelagert ist, insbesondere über einen Einsatz (54), der drehbar im Tauchkolben (20) angeordnet ist und das Eingriffselement (52) aufweist.

## Claims

1. A chassis system, in particular for commercial vehicles,
comprising a trailing arm (10) and a plunger piston (20) which are connected or can be connected to one another via a connecting region (40),
the connecting region (40) having an adjusting device which comprises an engagement element (52) and a guide element (50), it being possible for the engagement element (52) to be moved relative to the guide element (50) in such a way that a translational movement of the plunger piston (20) relative to the trailing arm (10) is made possible, and
**characterized in that**
the engagement element (52) may be displaced in the guide element (50) in an infinitely variable manner.

2. The chassis system as claimed in claim 1,
the adjusting device being designed to make a translational movement substantially parallel to an axle tube longitudinal direction (A) possible.

3. The chassis system as claimed in either of claims 1 and 2,
the guide element (50) having a guide channel (50), in particular a groove profile (50), which is preferably closed at one end.

4. The chassis system as claimed in one of the preceding claims,
one or more spacer pieces being arranged or being capable of being arranged in or on the guide element (50), in order to make setting of a position of the engagement element (52) relative to the trailing arm (10) and/or to the guide element (50) possible.

5. The chassis system as claimed in one of the preceding claims,
the guide element (50) being spaced apart from an axle tube center point (82) at a spacing (a) of approximately from 340 to 380 mm.

6. The chassis system as claimed in one of the preceding claims,
the engagement element (52) being offset relative to a center axis (M) of the plunger piston (20) by a spacing (x).

7. The chassis system as claimed in one of the preceding claims,
the engagement element (52) being configured in such a way that a rotatability of the plunger piston (20) relative to the trailing arm (10) is made possible.

8. The chassis system as claimed in one of the preceding claims,
the engagement element (52) being mounted rotatably in and/or on the plunger piston (20), in particular via an insert (54) which is arranged rotatably in the plunger piston (20) and has the engagement element (52).

## Revendications

1. Système de train de roulement, en particulier pour véhicule utilitaire, incluant un bras longitudinal (10) et un piston plongeur (20), lesquels sont reliés ou susceptibles d'être reliés l'un à l'autre via une zone de liaison (40),
dans lequel la zone de liaison (40) comprend un moyen de réglage, qui inclut un élément d'engagement (52) et un élément de guidage (50),
dans lequel l'élément d'engagement (52) est déplaçable par rapport à l'élément de guidage (50) de telle façon qu'un déplacement par translation du piston plongeur (20) par rapport au bras longitudinal (10) est rendu possible, et
**caractérisé en ce que** l'élément d'engagement (52) peut être déplacé de façon continue dans l'élément de guidage (50).

2. Système de train de roulement selon la revendication 1,
dans lequel le moyen de réglage est conçu pour rendre possible un déplacement par translation essentiellement parallèlement à une direction longitudinale (A) d'un tube d'essieu.

3. Système de train de roulement selon l'une des revendications 1 ou 2,
dans lequel l'élément de guidage (50) comporte un canal de guidage (50), en particulier un profil en forme de gorge (50), qui est de préférence fermé à une extrémité.

4. Système de train de roulement selon l'une des revendications précédentes,
dans lequel une ou plusieurs pièces d'écartement sont agencées ou susceptibles d'être agencées dans ou sur l'élément de guidage (50), afin de rendre possible un réglage d'une position de l'élément d'engagement (52) par rapport au bras longitudinal (10) ou respectivement par rapport à l'élément de guidage (50).

5. Système de train de roulement selon l'une des revendications précédentes,
dans lequel l'élément de guidage (50) est écarté d'un point médian (82) du tube d'essieu à une distance (a) d'environ 340 à 380 mm.

6. Système de train de roulement selon l'une des revendications précédentes,
dans lequel l'élément d'engagement (52) est décalé d'une distance (x) par rapport à un axe médian (M) du piston plongeur (20).

7. Système de train de roulement selon l'une des revendications précédentes,
dans lequel l'élément d'engagement (52) est réalisé de telle façon qu'une faculté de rotation du piston plongeur (20) par rapport au bras longitudinal (10) est rendue possible.

8. Système de train de roulement selon l'une des revendications précédentes,
dans lequel l'élément d'engagement (52) est monté en rotation dans et/ou sur le piston plongeur (20), en particulier au moyen d'un insert (54), qui est agencé en rotation dans le piston plongeur (20) et qui présente l'élément d'engagement (52).
